(19) Europäisches Patentamt
European Patent Office
Office européen des brevets

(11) EP 2 223 735 A1

(12) **EUROPEAN PATENT APPLICATION**
published in accordance with Art. 153(4) EPC

(43) Date of publication:
**01.09.2010 Bulletin 2010/35**

(21) Application number: **08846271.8**

(22) Date of filing: **04.11.2008**

(51) Int Cl.:
***B01D 53/94*** *(2006.01)* ***B01D 53/56*** *(2006.01)*
***B01D 53/81*** *(2006.01)* ***B01D 53/86*** *(2006.01)*
***B01J 20/02*** *(2006.01)* ***B01J 23/50*** *(2006.01)*
***B01J 23/58*** *(2006.01)* ***B01J 23/63*** *(2006.01)*
***B01J 29/76*** *(2006.01)* ***F01N 3/08*** *(2006.01)*
***F01N 3/10*** *(2006.01)* ***F01N 3/24*** *(2006.01)*
***F01N 3/28*** *(2006.01)*

(86) International application number:
**PCT/JP2008/070033**

(87) International publication number:
**WO 2009/060822 (14.05.2009 Gazette 2009/20)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.11.2007 JP 2007290273**

(71) Applicant: **Honda Motor Co., Ltd.**
**Minato-ku**
**Tokyo 107-8556 (JP)**

(72) Inventors:
- **ISHIMARU, Shinya**
**Wako-shi**
**Saitama 351-0193 (JP)**
- **MOTOHASHI, Go**
**Wako-shi**
**Saitama 351-0193 (JP)**
- **IWAMOTO, Jun**
**Wako-shi**
**Saitama 351-0193 (JP)**
- **MIKAMI, Hitoshi**
**Wako-shi**
**Saitama 351-0193 (JP)**

(74) Representative: **Herzog, Markus**
**Weickmann & Weickmann**
**Patentanwälte**
**Postfach 86 08 20**
**81635 München (DE)**

# (54) EXHAUST CLEANER FOR INTERNAL COMBUSTION ENGINE AND METHOD OF EXHAUST PURIFICATION

(57) A technique for exhaust purification by which nitrogen oxides contained in an exhaust gas discharged from an internal combustion engine in which a fuel burns mainly under lean conditions can be removed at a high efficiency even after low-temperature initiation. An exhaust cleaner (9) is provided in which the atmosphere of an exhaust gas discharged from an internal combustion engine (1) is periodically changed between oxidizing/reducing atmospheres to thereby remove nitrogen oxides from the gas. The cleaner comprises: a modifier (18) which introduces a modifying gas comprising hydrogen and carbon monoxide into a discharge channel (11) which leads the exhaust gas to the atmospheric-air side; an adsorption means (30) which includes at least silver oxide which consumes the hydrogen and is reduced, the adsorption means (30) adsorbing the nitrogen oxides and releasing the adsorbed nitrogen oxides with increasing temperature; and a purification means (17) which consumes the carbon monoxide and reduces the nitrogen oxides to purify the exhaust gas.

FIG.1

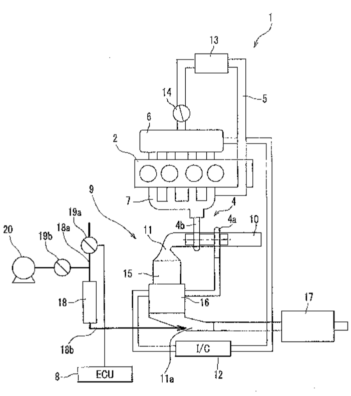


EP 2 223 735 A1

## Description

CROSS REFERENCE TO RELATED APPLICATIONS

This application claims the foreign priority benefit of Japanese Patent Application No.2007-290273, filed on November 8, 2007 in the Japan Patent Office, the disclosure of which is herein incorporated by reference in its entirety.

BACKGROUND OF THE INVENTIION

FIELD OF THE INVENTION

The present invention relates to a technique for purifying an exhaust gas discharged from an internal combustion engine in which a fuel burns under a lean condition. Particularly, the present invention relates to an exhaust purification technique for an internal combustion engine to remove a nitrogen oxide from the exhaust gas.

DESCRIPTION OF RELATED ART

In recent years, regulations for reducing amounts of a discharged nitrogen oxide ($NO_X$) contained in an exhaust gas of an internal combustion engine for an electric generator and an automobile, are becoming stringent spreading all over the world, from a view point of environmental preservation.

The nitrogen oxide is a harmful substance responsible for acid rain and photochemical smog. The nitrogen oxide is much contained in an exhaust gas of an internal combustion engine such as a diesel engine and a lean burn engine in which a fuel burns under a lean condition.

For the reason, establishment of the technology for removing a harmful substance such as a nitrogen oxide from an exhaust gas is an urgent need, which contributes to reduction of the amounts of the nitrogen oxide ($NO_x$) discharged in the atmosphere.

Here, a theoretical air/fuel ratio (stoichiometric ratio) is 14.7, at which a mixed gas of air and fuel burns just enough. A lean condition denotes a condition that a fuel concentration of the mixed gas is adjusted lower than the concentration at the air/fuel ratio of 14.7, and the resulting mixed gas is supplied to an internal combustion engine. In contrast, a rich condition denotes a condition that a fuel concentration of the mixed gas is adjusted higher than the concentration at the air/fuel ratio of 14.7.

Exhaust purification of removing a nitrogen oxide in an exhaust gas, is performed by reducing the nitrogen oxide. However, there is a problem that an oxygen partial pressure in the exhaust gas is too high to perform the reduction. Therefore, various methods have been studied to solve the problem.

For example, the following conventional technique is known. First, an exhaust gas is passed over a catalyst that absorbs or adsorbs a nitrogen oxide, and thereby the nitrogen oxide contained in the exhaust gas is temporarily absorbed or adsorbed to the catalyst.

Subsequently, the mixed gas is temporarily supplied under a rich condition so as to decrease an oxygen partial pressure in the exhaust gas, and then the nitrogen oxide absorbed or adsorbed is reduced. Various conventional examples using the above mentioned technique have been reported as described below.

A first conventional example is a technique using a catalyst made of a combination of an alkaline metal such as potassium and an alkaline earth metal such as barium with platinum. According to the technique, an atmosphere of the exhaust gas is changed between oxidizing and reducing atmospheres by periodically changing a combustion condition between the lean and the rich conditions. Accordingly, purification of the exhaust gas is achieved by absorbing and reducing the nitrogen oxide on the catalyst. The technique is disclosed in the non-patent document: "Development of three-way catalyst system with NOX absorption/reduction", Transactions of the Society of Automotive Engineers of Japan, Vol.26, No.4, October 1995; Japanese Patent Publication No. 2586738 and Japanese Patent Publication No. 2600492.

A second conventional example is a technique using a catalyst made of a combination of ceria, platinum and solid acid. According to the technique, a combustion condition is periodically changed between the lean and the rich conditions similar to the technique as mentioned above. Here, when the exhaust gas becomes a reducing atmosphere, carbon monoxide reacts with water to yield hydrogen, then the hydrogen reacts with a nitrogen oxide to produce ammonia. Next, when the exhaust gas becomes an oxidizing atmosphere, the ammonia reacts with the nitrogen oxide to yield a nitrogen gas and water. Accordingly, purification of the exhaust gas is conducted. The technique is disclosed in the non-patent document: "A NOX Reduction System Using Ammonia Storage-Selective Catalytic Reduction in Rich and Lean Poerations", 15, Aachener Kolloquium Fahrzeug-und Motorentechnik, 2006, p.259-270, and International PCT Publication No. WO2005/044426.

A third conventional example is a technique based on the first conventional example, in which a hydrogen

enriching means is provided inside an exhaust passage at the upstream side of the catalyst arrangement position. A hydrogen contained gas is produced by the hydrogen enriching means and delivered to the downstream of the exhaust passage. Accordingly, purification of the exhaust gas is achieved by reducing the nitrogen oxide through the catalyst. The technique is disclosed in Japanese Patent Publication No. 3642273.

The technique uses hydrogen which is separately produced as a reducing reagent to reduce a nitrogen oxide. Therefore, the technique is different from the method in which carbon monoxide and hydrocarbon by-products produced during combustion are used as described in the first and second conventional examples.

Further, a fourth conventional example is a technique that a nitrogen oxide produced during combustion under a lean condition is reduced at a low temperature. A technique using palladium as a metal active species, and vanadia, titania and alumina as an oxide carrier, is disclosed in the non-patent document: "Selective catalytic reaction of nitric oxide with hydrogen over Pd-based catalysts", G. Qi et al., Journal of Catalysis, 237 (2006), pp.381-392. Further, another technique using platinum as a metal active species, and zirconia as an oxide support, is disclosed in the non-patent document: "Improvements in the N2 selectivity of Pt catalysts in the NO-H2-O2 reaction at low temperature", T. Nanba et al., Applied Catalysis B: Environmental, 46 (2003), pp. 353-364.

Both techniques use hydrogen as a reducing reagent so as to purify an exhaust gas by efficiently reducing a nitrogen oxide over a range of temperatures from a low temperature.

Meanwhile, the temperature at which a catalyst efficiently treats a nitrogen oxide to purify an exhaust gas is relatively high: equal to or more than about 200 °C. Therefore, an exhaust gas is not sufficiently purified at a temperature lower than 200 °C. Hereby, according to the first, second and third conventional techniques as mentioned above, there is a problem that a catalyst can not treat a nitrogen oxide to purify an exhaust gas at a low-temperature initiation of an internal combustion engine.

According to the fourth conventional technique, a nitrogen oxide is actually reduced at a relatively low temperature of about 80 °C and purification of an exhaust gas is started. However, it is needed for the technique to satisfy the condition that an oxygen concentration in the exhaust gas is equal to or less than 5% and no carbon monoxide is present. If the condition is not satisfied, a problem occurs that a performance of purifying the exhaust gas rapidly decreases. Note that an oxygen concentration in the actual exhaust gas discharged from an internal combustion engine which is under a lean condition, is equal to or more than 10%, and carbon monoxide is present in the exhaust gas. Therefore, it is not realistic to purify the exhaust gas by the fourth conventional technique.

## SUMMARY OF THE INVENTION

The present invention has been developed to solve the foregoing problems. An object of the present invention is to provide an exhaust purification apparatus and a purification method for an internal combustion engine, which can purify an exhaust gas at a high efficiency even after a low-temperature initiation.

According to the present invention, the exhaust purification apparatus periodically changes an atmosphere of the exhaust gas discharged from an internal combustion engine between oxidizing and reducing atmospheres to thereby remove a nitrogen oxide from the exhaust gas. The exhaust purification apparatus comprises a reforming means that introduces a reforming gas containing hydrogen and carbon monoxide into an exhaust passage that leads the exhaust gas to the atmospheric air side, an adsorption means that includes at least silver oxide which consumes the hydrogen and is reduced, the adsorption means adsorbing the nitrogen oxide and releasing the adsorbed nitrogen oxide as a temperature increases, and a purification means that consumes the carbon monoxide and reduces the nitrogen oxide to purify the exhaust gas.

According to the above mentioned construction, the nitrogen oxide in the exhaust gas is temporarily trapped by the adsorption means at the low-temperature initiation at which the purification means can not work. Then, the nitrogen oxide trapped by the adsorption means is released at the high temperature state in which the purification means can work. The released nitrogen oxide is subsequently treated by the purification means to be a harmless nitrogen gas which is released to the atmosphere.

Herein, the adsorption means loses the trapping function of the nitrogen oxide in the state that such high temperature state is maintained. Hereby, the nitrogen oxide in the exhaust gas passes through the adsorption means and is directly treated by the purification means to be a harmless nitrogen gas which is released to the atmosphere.

As a result, the present invention provides an exhaust purification apparatus and a purification method for an internal combustion engine, which can remove a nitrogen oxide over a wide range of temperatures between low to high temperatures to purify the exhaust gas at a high efficiency.

## BRIEF DESCRIPTION OF THE DRAWINGS

FIG. 1 is a schematic diagram showing a diesel engine (or internal combustion engine) comprising the exhaust purification apparatus of the embodiment of the present invention.

FIGS. 2A to 2D are diagrams showing a reforming means, a adsorption means, and a purification means, which are components of the exhaust purification apparatus, and modifications of the arrangement thereof.

FIG. 3 is a diagram showing a performance evaluation apparatus that evaluates the performance of the reforming means.

FIG. 4 is a diagram showing an apparatus that evaluates purification of the exhaust gas from which a nitrogen oxide is removed by the exhaust purification apparatus.

FIG. 5 shows an example of a catalyst composition of the purification means according to the present invention.

FIG. 6 shows results of the reforming performance evaluation of the reforming means according to the present invention.

FIG. 7A shows a composition of a model gas for the exhaust gas in Example 1.

FIG. 7B is a diagram simply showing an arrangement of the components of the apparatus that evaluates the purification performance.

FIG. 8A is a graph showing a result of the performance evaluation test that is conducted by changing a temperature in Example 1.

FIG. 8B is a graph showing a result of the performance evaluation test that is conducted by changing a temperature in Example 2.

FIG. 8C is a graph showing a result of the performance evaluation test that is conducted by changing a ratio of the supported silver of the adsorption means in Example 3.

FIG. 9A shows a composition of a model gas for the exhaust gas in Example 4.

FIG. 9B is a graph showing a result of the performance evaluation test conducted by changing a hydrogen amount added to the model gas.

FIG. 10A shows a composition of a model gas for the exhaust gas in the example 5.

FIG. 10B is a graph showing a result of the performance evaluation test conducted by changing an oxygen concentration in the model gas.

FIG. 11A shows a composition of a model gas for the exhaust gas in Example 6.

FIG. 11B is a graph showing a result of the performance evaluation test conducted by changing a carbon monoxide concentration in the model gas.

FIG. 12A shows a composition of a model gas for the exhaust gas in Comparative example 1.

FIG. 12B is a graph showing a result of the performance evaluation test conducted by changing a temperature.

FIG. 13A is a diagram simply showing an arrangement of the components of the apparatus that evaluates the purification performance in Comparative example 2.

FIG. 13B is a graph showing a result of the performance evaluation test conducted by changing a temperature.

FIG. 14A is a diagram simply showing an arrangement of the components of the apparatus that evaluates the purification performance in Comparative example 3.

FIG. 14B is a graph showing a result of the performance evaluation test conducted by changing a temperature.

## DETAILED DESCRIPTION OF THE PREFERRED EMBODIMENT

Next, the exhaust purification apparatus for an internal combustion engine of the present invention will be explained in detail referring to the attached drawings.

FIG. 1 is a schematic diagram showing an embodiment of a diesel engine (or internal combustion engine) comprising the exhaust purification apparatus of the present invention.

The internal combustion engine 1 comprises a cylinder head 2, turbocharger 4, an exhaust gas recirculation passage (hereinafter referred to EGR) 5, an intake manifold 6, an exhaust manifold 7, ECU (electronic control unit) 8, and an exhaust purification apparatus 9.

Here, a diesel engine is shown as an example of an internal combustion engine. However, the internal combustion engine to which the exhaust purification apparatus and the method of the present invention are applied is not limited to the diesel engine. It is possible to apply the exhaust purification apparatus and the method of the present invention to a gasoline engine.

The cylinder head 2 comprises a plurality of combustion chambers. Four combustion chambers are shown in FIG. 1.

Each combustion chamber is connected through the intake manifold 6 that sucks an oxygen contained gas (that is, air). Then, the sucked air is compressed by a cylinder vertically moving in the combustion chamber, and a fuel (diesel fuel) stored in a fuel tank (not shown) is injected through an injection valve (not shown).

Hereby, combustion is started through spontaneous ignition (or compression ignition) in the combustion chamber, and a piston is moved downward by the resulting combustion pressure. Subsequently, when the piston is moved

upward, an exhaust gas is discharged into an exhaust manifold 7 and passes through an exhaust passage 11.

An ordinary combustion in the combustion chamber of the internal combustion engine 1 is performed under a lean condition that a ratio between air and fuel (air/fuel) is higher than a theoretical ratio (stoichiometric ratio: 14.7). Therefore, during an ordinary combustion, an exhaust gas that passes through the exhaust passage 11 is an oxidizing atmosphere with a high oxygen partial pressure.

Meanwhile, for the internal combustion engine 1, there is a step called a post injection in which an injected fuel passes through the exhaust passage 11 unburned, after the above mentioned ordinary combustion step is finished. The components of the fuel are almost hydrocarbon (HC). Thereby, the exhaust gas containing the unburned fuel is a reducing atmosphere with a low oxygen partial pressure.

As mentioned above, an atmosphere of the exhaust gas discharged from the internal combustion engine 1 is periodically changed between oxidizing and reducing atmospheres. To date, a variety of methods of periodically changing an atmosphere of the exhaust gas have been reported. For example, in addition to the post injection as mentioned above, there is a method of periodically changing a combustion condition in a combustion chamber between a lean condition and a rich condition.

Here, in a turbocharger 4, a turbine 4b is rotated by an exhaust gas discharged from an exhaust manifold 7, then a compressor 4a is driven synchronized with the rotation and stacks the air from an upstream end of an intake passage 10 to excessively supply the air. The excessively supplied air has a high temperature because of adiabatic compression, thereby is supplied to an intake manifold 6 after being cooled by an inter-cooler 12.

An EGR 5 recirculates a part of the exhaust gas from the exhaust manifold 7 to the intake manifold 6 based on the action of an EGR cooler 13 and an EGR valve 14, and decreases a combustion temperature to prevent a nitrogen oxygen from being produced.

An ECU 8 controls operation of components of the internal combustion engine 1 so that an optional combustion condition is achieved corresponding to a load of the internal combustion engine.

An exhaust purification apparatus 9 comprises a first exhaust convertor 15, a second exhaust convertor 16, a third exhaust convertor 30 (referred to adsorption means), a fourth exhaust convertor 17 (referred to purification means), and a fuel reforming apparatus 18 (referred to reforming means). Among the above mentioned components, the first, the second, the third, and the fourth convertors 15, 16, 30, and 17 are arranged along the exhaust passage 11 from upstream to downstream side in that order, while the fuel reforming apparatus 18 is independently arranged as a separated component from the exhaust passage 11.

The first exhaust converter 15 reduces a nitrogen oxide by a catalytic action through combustion of carbon monoxide and hydrocarbon in the exhaust gas. The first exhaust converter 15 supports a purification of the exhaust gas of the fourth exhaust convertor 17.

The second exhaust convertor 16 traps a particulate matter (PM) such as soot in the exhaust gas. The trapped particulate matter, which is gradually piled in the second exhaust converter 16, is burned to be cleaned.

<Explanation of Reforming Means>

The fuel reforming apparatus 18 (referred to reforming means) comprises as a catalyst at least one or more metal components selected from a group of platinum, rhodium, palladium, nickel, cobalt and iron, and at least one or more oxides or composite oxides selected from a group of ceria, alumina, zirconnia, titania, magnesia, and zeolite.

The reforming means 18 is connected to a fuel tank (not shown) at the upstream side through a fuel supply passage 18a having a fuel supply valve 19a. The fuel supply passage 18a is connected to a compressor 20 through a pressure regulation valve 19b.

Further, the reforming means 18 is connected at the downstream side to an exhaust passage 11 (11a) through a reforming gas passage 18b, the exhaust passage 11 (11a) being positioned at the upstream of the third exhaust convertor 30 (referred to adsorption means). Here, the reforming means 18 shown in FIGS. 1 and 2A is independently arranged as a separated component from the exhaust passage 11. However, the arrangement of the reforming means 18 is not limited to the above mentioned construction. For example, the reforming means 18 can be arranged inside the exhaust passage 11 as shown in FIG. 2B.

The reforming means 18 thus constructed produces a reforming gas containing carbon monoxide and hydrogen by a fuel supplied from a fuel tank (not shown) and air (or oxygen contained gas) supplied from the compressor 20. Then, the reforming means 18 introduces the reforming gas into the exhaust passage 11 (11a) .

The reforming gas is generally produced in the following three chemical reactions represented by Equations (1) to (3), as exemplified below. The detail descriptions will be shown in FIG. 6 described hereinafter.

$$6C_nH_{1.8n} + 3nO_2 \longrightarrow 6nCO + 5.4nH_2 \quad (1)$$

:partial oxidation reaction (POX)

$$6C_nH_{1.8n} + 2nO_2 + 2nH_2O \longrightarrow 6nCO + 7.4nH_2 \quad (2)$$

:autothermal reforming reaction (ATR)

$$6C_nH_{1.8n} + 6nH_2O \longrightarrow 6nCO + 11.4nH_2 \quad (3)$$

:steam reforming reaction (SR)

The above equations do not include a water gas shift reaction. A diesel fuel (C:H = 1.8) is used as a fuel.

Here, it is preferable that the reforming gas of the present embodiment is produced by the partial oxidation reaction with hydrocarbon shown in Equation (1), as described below.

As shown in Equations (2) and (3), it is preferable that water is used as a reaction material so as to produce hydrogen at a high efficiency. This reaction is an endothermic reaction and requires a heating means to facilitate the reaction.

Accordingly, a large amount of heat is needed at the initiation of the reforming means 18. Therefore, a longer time is needed at low-temperature initiation of the exhaust purification apparatus 9, and a water supply means is further needed, causing size and cost increases of the exhaust purification apparatus 9.

A reforming gas produced in Equation (1) in which water is not related to the reforming reaction, which contributes to size and cost decreases of the exhaust purification apparatus 9. Further, another advantageous effect is provided that a reforming gas can be produced quickly at the low-temperature initiation, resulting in shortening of the initiation period. Moreover, the reforming gas produced in Equation (1), is a hydrogen contained gas which contains carbon monoxide more than hydrogen. It is preferable to use the above mentioned reforming gas in a point of view that a reaction efficiency of the fourth exhaust converter 17 (referred to purification means) can be increased, as mentioned hereinafter.

Further, it is preferable that the reforming means 18 introduces the reforming gas into the exhaust passage 11 so that a hydrogen concentration of the exhaust gas is maintained in a range of 0.01 volume% to 4 volume%, by appropriately controlling a fuel supply valve 19a, a compressor 20, and a pressure regulation valve 19b.

When a hydrogen concentration is less than 0.01 volume%, a conversion reaction of silver oxide to metal silver (Equation (4) described hereinafter) does not proceed sufficiently because of the low hydrogen concentration. Hereby, an adsorption ratio of a nitrogen oxide in the adsorption means 30 is limited to a low level of a few percentages at 150 °C.

In contrast, when a hydrogen concentration is equal to or more than 0.01 volume%, a conversion ratio from silver oxide to metal silver is increased. Hereby, when the hydrogen concentration is 0.5 volume%, an adsorption ratio of a nitrogen oxide in the adsorption means 30 is greatly increased to a high level of about 90% at 150 °C, as shown in FIG. 9B described hereinafter.

However, when a hydrogen concentration is more than 4 volume%, reaction amounts of hydrogen and oxygen in a combustion reaction are increased at a temperature of 200 °C and more. The resulting combustion heat increases a temperature of the catalyst, which promotes a release of a nitrogen oxide. As a result, the adsorption ability of the nitrogen oxide is not increased in proportion to the hydrogen concentration. That is, the adsorption ability of the nitrogen oxide is saturated even though the hydrogen concentration is increased. Moreover, when the hydrogen concentration is more than 4 volume%, the concentration becomes an explosive limit concentration. Thus, it is not preferable to add hydrogen over the concentration of 4 volume% because an increased amount of the effective adsorption can not be expected and economical and cost disadvantages are anticipated.

Further, it is preferable that the reforming gas is mixed to an exhaust gas after raising a temperature of the reforming gas higher than a temperature of the exhaust passage 11. This operation supports an increase of catalyst temperatures of the adsorption means 30 and the purification means 17. Accordingly, it is possible to shorten an adsorption initiation time and a purification initiation time.

It is preferable that the reforming means 18 introduces the reforming gas into the exhaust passage 11 so that an oxygen concentration of the exhaust gas is maintained in a range of 0.2 volume% to 21 volume%, by appropriately

controlling a fuel supply valve 19a, a compressor 20, and a pressure regulation valve 19b, as mentioned FIG. 10B described hereinafter.

As a result, it is possible to adsorb a nitrogen oxide at a high efficiency in the third exhaust convertor 30 (referred to adsorption means) described hereinafter.

When an oxygen concentration of the exhaust gas is less than 0.2 volume%, an adsorption ratio of a nitrogen oxide is limited to a few percentages at 150 °C. Therefore, it is not preferable to decrease the oxygen concentration less than 0.2 volume%, since a performance of the adsorption means 30 can not be sufficiently achieved.

As shown in Equations (5) and (6) described hereinafter, the adsorption means needs oxygen in the exhaust gas in order to adsorb a nitrogen oxide. At the oxygen concentration less than 0.2 volume%, the adsorption means can not sufficiently change a nitrogen oxide to $NO_3$.

For that reason, an increase of the oxygen concentration in the exhaust gas facilitates a conversion of the nitrogen oxide in the exhaust gas to NO3. For example, when the oxygen concentration is 10 volume%, the adsorption ratio of the nitrogen oxide at 150 °C reaches a high level of 90%.

However, at an excess oxygen concentration, a combustion reaction with hydrogen occurs at about 150 °C and more to increase a temperature of the adsorption means 30. The temperature increase promotes a release of the nitrogen oxide as shown in Equations (7) and (8) described hereinafter. As a result, when the oxygen concentration is increased too much, an adsorption amount of the nitrogen oxide tends to be slightly decreased. However, there is no case that the oxygen concentration in the exhaust gas exceeds over 21 volume% which is a usual oxygen concentration in the air. Therefore, it is not preferable to increase the oxygen concentration over 21 volume% because of a necessity of another oxygen introduction apparatus and a cost disadvantage.

<Explanation of Adsorption Means>

The adsorption means 30 comprises at least particles of silver oxide as a catalyst, and equal to and more than one oxide components selected from a group of alumina, silica, zirconia, titania, ceria, and zeolite.

According to the above mentioned construction, at a low temperature around 100 °C, the adsorption means 30 consumes hydrogen in the reforming gas mixed in the exhaust gas to reduce silver oxide, and adsorbs a nitrogen oxide mixed in the exhaust gas. Then, as the temperature of the adsorption means 30 is increased from the low temperature to a high temperature, the adsorption means 30 releases the adsorbing nitrogen oxide.

Here, a kind of reagent mixed in the adsorption means 30 and the amount thereof are not limited to the examples described hereinbefore. Preferably, silver is mixed so that a content ratio of supported silver of the catalyst is in a rage of 0.1 to 10 weight% as shown in FIG. 8C described later.

When the content ratio of silver is less than 0.1 weight%, an adsorption performance of the catalyst is not sufficiently achieved because of the insufficient number of adsorption sites to which a nitrogen oxide is adsorbed. Actually, the adsorption ratio of a nitrogen oxide is limited to a low level around a few percentages at 150 °C.

In contrast, when the content ratio of silver is 0.1 weight% and more, the number of adsorption sites on silver particles contacting to an exhaust gas is increased thereby to remarkably improve an adsorption performance of a nitrogen oxide. Actually, when the content ratio of silver is 4 weight%, the adsorption ratio reaches a high level around 90% at 150 °C.

Further, when the content ratio of silver is more than 10 weight%, silver particles are agglomerated each other and an increase in the surface area to be adsorption sites gets to an upper limit. Here, the adsorption amount of a nitrogen oxide gets to an upper limit for the increase in the amount of supported silver. Therefore, it is not preferable to add an excess amount of silver more than needed because an increase in the adsorption amount of a nitrogen oxide can not be expected and economical and cost disadvantages are anticipated.

<Adsorption Mechanism of Nitrogen Oxide in Adsorption Means>

Chemical reactions occurred in the adsorption means 30 proceed in Equations (4) to (8) as exemplified below.

$$AgO + H_2 \longrightarrow Ag\ (*) + H_2O \qquad (4)$$

$$NO + O_2 + Ag\ (*) \longrightarrow NO_3\ (ad) + Ag\ (*) \qquad (5)$$

$$2NO_2 + O_2 + Ag\ (*) \longrightarrow 2NO_3\ (ad) + Ag\ (*) \quad (6)$$

$$2Ag\ (*) + O_2 \longrightarrow 2AgO \quad (7)$$

$$2NO_3\ (ad) + Ag\ (*) \longrightarrow 2NO_2 + O_2 + AgO \quad (8)$$

In the above equations, AgO denotes silver oxide, Ag (*) denotes metal silver, and (ad) means adsorption to the adsorption means.

According to the equations, a silver particle included in the adsorption means 30 is in an oxide state (that is, silver oxide) under an oxidizing atmosphere, and thereby is inactive for a nitrogen oxide, having no adsorption ability. However, when hydrogen (or reforming gas) is introduced into the exhaust gas, the oxidizing atmosphere is changed to a reducing atmosphere. Then, silver oxide consumes the hydrogen and is reduced to be converted to metal silver as shown in Equation (4).

The metal silver thus obtained in the reduction has a remarkably increased ability of adsorbing a nitrogen oxide in comparison with silver oxide. When a temperature of the adsorption means 30 becomes about 100 °C, the nitrogen oxide is adsorbed to the adsorption means 30 with being oxidized. Herein, the nitrogen oxide denotes both nitrogen monoxide and nitrogen dioxide as shown in Equations (5) and (6).

When a temperature of the adsorption means becomes about 200 °C and more, hydrogen directly reacts with oxygen to be burned and consumed. Hereby, metal silver is oxidized and changed again to silver oxide as shown in Equation (7). As a result, the adsorption ability of adsorbing the nitrogen oxide is decreased, and the nitrogen oxide already adsorbed is to be released mainly as nitrogen dioxide as shown in Equation (8). A discharged amount of nitrogen dioxide released is increased as a temperature of the adsorption means increases. The discharge of nitrogen dioxide continues until the temperature of the adsorption means reaches about 300 °C.

As mentioned above, the adsorption means 30 temporarily traps a nitrogen oxide in the exhaust gas and prevents the nitrogen oxide from being discharged to the atmosphere, in the low-temperature state in which the fourth exhaust convertor 17 (or purification means) can not work. Then, the nitrogen oxide trapped by the adsorption means 30 is released when a temperature becomes high so that the fourth exhaust convertor 17 can work. The released nitrogen oxide is subsequently treated by the fourth exhaust convertor 17 and changed to a harmless nitrogen gas which is released to the atmosphere. Herein, the adsorption means 30 loses the trapping function of the nitrogen oxide in the state that such high temperature state is maintained. Hereby, the nitrogen oxide in the exhaust gas passes through the adsorption means 30 and is directly treated by the fourth exhaust convertor 17.

Here, as mentioned above, hydrogen in the reforming gas mixed in the exhaust gas is consumed when the hydrogen passes through the adsorption means 30, while carbon monoxide passes through the adsorption means 30 to reach the fourth exhaust convertor 17.

<Explanation of Purification Means>

The fourth exhaust converter 17 (referred to purification means) comprises a catalyst component A, a catalyst component B, and a catalyst component C. Herein, the catalyst component A includes a mixture of compounds (a), (b) and (c), and/or composite oxides of compounds (a), (b) and (c). The compound (a) denotes ceria and the compound (b) denotes praseodymium oxide. The compounds (c) denote oxides of at least two elements selected from a group of cerium, zirconium, praseodymium, neodymium, terbium, samarium, gadolinium, and lanthanum. The catalyst component B includes at least one noble metal catalyst component selected from a group of platinum, rhodium, palladium and oxides thereof. The catalyst component C includes a solid acid carrying at least one metal oxide selected from a group of oxides of vanadium, tungsten, molybdenum, cupper, iron, nickel, and manganese.

Further, the fourth exhaust converter 17 (referred to purification means) preferably includes at least one or more metals selected from a group of alkaline metals (Li, Na, K, Rb, and Cs) and alkaline earth metals (Mg, Ca, Sr, and Ba). Accordingly, it is possible to remove a nitrogen oxide at a high efficiency.

The fourth exhaust converter 17 (referred to purification means) constructed as mentioned above, consumes carbon monoxide flowing from upstream and reduces a nitrogen oxide to purify the exhaust gas.

The purification means 17 reduces a nitrogen oxide to purify the exhaust gas in the following chemical reactions represented by Equations (9) to (16). As mentioned hereinbefore, the purification is performed associating with a periodic

change of the atmosphere of the exhaust gas between oxidizing and reducing atmospheres, the exhaust gas being discharged from an internal combustion engine.

$$NO \longrightarrow NO\ (ad) \qquad (9)$$

$$2NO + O_2 \longrightarrow 2NO_2\ (ad) \qquad (10)$$

$$NO_2 \longrightarrow NO_2\ (ad) \qquad (11)$$

$$CO + H_2O \longrightarrow H_2 + CO_2 \qquad (12)$$

$$5H_2 + 2NO\ (ad) \longrightarrow 2NH_3\ (ad) + 2H_2O \qquad (13)$$

$$4NH_3 + 4NO + O_2 \longrightarrow 4N_2 + 6H_2O \quad (14) \quad \text{(low reactivity)}$$

$$2NH_3 + NO_2 + NO \longrightarrow 2N_2 + 3H_2O \quad (15) \quad \text{(high reactivity)}$$

$$8NH_3 + 6NO_2 \longrightarrow 7N_2 + 12H_2O \qquad (16)$$

Chemical reactions of Equations (9) to (11) and (14) to (16) proceed in an oxidizing atmosphere (that is, in a high oxygen partial pressure). Herein, (ad) means the adsorption to the catalyst.

Chemical reactions of Equations (12) and (13) proceed in a reducing atmosphere (that is, in a low oxygen partial pressure) .

As mentioned above, when the atmosphere of the exhaust gas is an oxidizing atmosphere, a nitrogen oxide is adsorbed to the purification means 17 in a catalytic reaction, or a nitrogen oxide is further oxidized to $NO_2$ and adsorbed as $NO_2$ as shown in Equations (9) to (11).

Next, when the atmosphere of the exhaust gas is changed to a reducing atmosphere, carbon monoxide reacts with water to produce hydrogen as shown in Equation (12): water gas shift reaction. The produced hydrogen reacts with the adsorbed nitrogen oxide to produce ammonia. The produced ammonia is adsorbed to the purification means 17 as shown in Equation (13).

Then, when the atmosphere of the exhaust gas is changed again to an oxidizing atmosphere, the adsorbed ammonia reacts with a nitrogen oxide in the exhaust gas, and thereby the nitrogen oxide is reduced at a high efficiency to be converted to a harmless nitrogen gas. Accordingly, purification of the exhaust gas is achieved as shown in Equations (14) to (16).

Note that most of the nitrogen oxides released from the adsorption means 30 are nitrogen dioxide as shown in Equation (8). Therefore, the chemical reactions in Equations (15) and (16) mainly proceed rather than the chemical reaction in Equation (14). As a result, the performance of the purification means 17 for treating the nitrogen oxide is improved.

Additionally, carbon monoxide contained in the reforming gas delivered from the reforming means 18, passes through the adsorptions means 30 and is introduced to the purification means 17. As a result, the chemical reaction in Equation 12 is promoted, and the performance of the purification means 17 for treating the nitrogen oxide is improved.

Here, it is needed to raise a temperature of the catalyst in the purification means 17 to the temperature at which

the catalyst is activated so that the catalytic reactions (Equations (9) to (16)) proceed in the purification means 17. Therefore, the purification means 17 does not work during a predetermined period while the temperature of the catalyst is increasing just after the low-temperature initiation of an internal combustion engine 1. During the period, a nitrogen oxide in the exhaust gas is temporarily trapped by the adsorption means 30 and does not reach the purification means 17.

Subsequently, when the temperature becomes a high temperature at which the purification means 17 works, the nitrogen oxide trapped by the adsorption means 30 is released, and reaches the purification means 17 after the release. The nitrogen oxide is treated by the purification means 17 to be a harmless nitrogen gas.

Further, in the state while the high temperature is maintained, the adsorption means 30 loses the trapping ability. Thereby, a nitrogen oxide in the exhaust gas passes through the adsorption means 30, and is directly treated by the purification means 17 to be a harmless nitrogen gas.

As mentioned above, it is possible to continuously remove the nitrogen oxide at a high efficiency even just after the low-temperature initiation of the internal combustion engine 1.

<Embodiment of Conjugation of Adsorption Means and Purification Means>

Hereinbefore, it has been described that the third exhaust convertor 30 carries an adsorption means and that the fourth exhaust convertor 17 carrying a purification means is arranged at the downstream of the third exhaust convertor 30, as shown in FIGS. 1, 2A and 2B. However, the above mentioned construction is an example and the present invention is not limited to the example.

As shown in FIG. 2C, it is possible to have a construction in which the adsorption means 30 and the purification means 17 are layered each other and a carrying member 33 carries the adsorption means 30 and the purification means 17 in a common exhaust convertor 31.

Herein, the order that the adsorption means 30 and the purification means 17 are layered on the carrying member 33 is optional. Further, other members can be provided on the respective interfaces of the adsorption means 30, the purification means 17 and the carrying member 33.

Alternatively, it is possible to have a construction in which the adsorption means 30 and the purification means 17 are not layered as shown in FIG. 2D. In the construction, the adsorption means 30 and the purification means 17 are formed as particles and the particles are carried by the carrying member 33 with being mixed in a dispersion state.

EXAMPLES

<Preparation of Catalyst Included in Reforming Means>

Next, examples of preparation of a catalyst included in the reforming means 18 will be described.

(Example A)

a) To a mixture of $CeO_2$ (125 g, JGC C&C, cerium oxide C) and 5% rhodium nitrate solution (25g, Kojima Chemical Co. , Ltd.), was added ion exchange water, and excess water was removed by a rotary evaporator. The resulting mixture was dried in a drying furnace at 200 °C for 2 hr, and fired in a muffle furnace at 600 °C for 2 hr to yield a powder.
b) To the powder (45g) thus obtained, were added an alumina binder (25g, $Al_2O_3$, 20% conc.; Nissan Chemical Co., Ltd.) and ion exchange water. A slurry was obtained.
c) In the slurry, was immersed a cordierite honeycomb carrier, having $\phi$ 50mm X L 35mm (67cc), 400 cell/inch$^2$, and a thickness of a partition wall of 3.5 mil (3.5 X $10^{-3}$ inch). Then the honeycomb carrier was taken out of the slurry. Excess adhesives were removed by air jetting and the honeycomb carrier was heated at 200 °C for 2 hr.

The steps of immersing in the slurry and subsequent heating were repeated until a predetermined amount of the catalyst composition was supported on the honeycomb carrier. Finally, the honeycomb carrier was fired in a muffle furnace at 500 °C for 2 hr.

As mentioned above, the honeycomb carrier supporting 1wit% Rh/$CeO_2$ catalyst having a wash coat amount of 100g/L, was prepared as a catalyst included in the reforming means 18.

<Preparation of Catalyst Included in Adsorption Means>

Next, examples of preparation of a catalyst included in the adsorption means 30 will be described.

(Example B)

a) To a mixture of boehmite (125.3 g, SASOL Co., PURAL SB) and silver nitrate (6.28g, Kojima Chemical Co., Ltd. special grade), was added ion exchange water, and excess water was removed by a rotary evaporator. The resulting mixture was dried in a drying furnace at 200 °C for 2 hr, and fired in a muffle furnace at 600 °C for 2 hr to yield a powder.
b) To the powder (45g) thus obtained, were added an alumina binder (25g, $Al_2O_3$, 20% conc.; Nissan Chemical Co., Ltd.) and ion exchange water. A slurry was obtained.
c) In the slurry, was immersed a cordierite honeycomb carrier, having ϕ 25.4mm X L60mm (30cc), 400 cell/inch$^2$, and a thickness of a partition wall of 3.5 mil (3.5 X $10^{-3}$ inch). Then the honeycomb carrier was taken out of the slurry. Excess adhesives were removed by air jetting and the honeycomb carrier was heated at 200 °C for 2 hr.

The steps of immersing in the slurry and subsequent heating were repeated until a predetermined amount of the catalyst composition was supported on the honeycomb carrier. Finally, the honeycomb carrier was fired in a muffle furnace at 500 °C for 2 hr.
As mentioned above, the honeycomb carrier supporting 4wt% silver/alumina catalyst having a wash coat amount of 300g/L: $4Ag/Al_2O_3$ (boehmite), was prepared as a catalyst included in the adsorption means 30.
Further, other types of honeycomb carriers supporting a silver alumina catalyst were prepared by changing blend amounts of boehmite and silver nitrate with keeping other conditions same as the conditions described in the preparation of the catalyst included in the adsorption means hereinbefore. That is, the above mentioned honeycomb carriers supporting the silver alumina catalyst were prepared by changing the silver content therein as shown in Examples C to H.

(Example C)

A honeycomb carrier supporting a silver alumina catalyst with 0.1wt% silver supporting rate: $0.1Ag/Al_2O_3$ (boehmite) was prepared by using boehmite (130. 41g) and silver nitrate (0.157g).

(Example D)

A honeycomb carrier supporting a silver alumina catalyst with 0.5wt% silver supporting rate: $0.5Ag/Al_2O_3$ (boehmite) was prepared by using boehmite (129.89g) and silver nitrate (0.78g).

(Example E)

A honeycomb carrier supporting a silver alumina catalyst with 1wt% silver supporting rate: $1Ag/Al_2O_3$ (boehmite) was prepared by using boehmite (129.24g) and silver nitrate (1.57g).

(Example F)

A honeycomb carrier supporting a silver alumina catalyst with 2wt% silver supporting rate: $2Ag/Al_2O_3$ (boehmite) was prepared by using boehmite (127.93g) and silver nitrate (3.14g).

(Example G)

A honeycomb carrier supporting a silver alumina catalyst with 6wt% silver supporting rate: $6Ag/Al_2O_3$ (boehmite) was prepared by using boehmite (122.72g) and silver nitrate (9.42g).

(Example H)

A honeycomb carrier supporting a silver alumina catalyst with 10wt% silver supporting rate: $10Ag/Al_2O_3$ (boehmite) was prepared by using boehmite (117.49g) and silver nitrate (15. 7g) .

<Preparation of Purification Catalyst Included in Purification Means>

Next, examples of preparation of a catalyst included in the purification means 17 will be described.

(Example I)

a) To a mixture of cerium oxide (38.8g), a composite oxide of cerium, praseodymium and lanthanum (38.8g), alumina (19.4g), and a diammine dinitro platinum solution (Pt: 5wt%, 58.2g), was added ion exchange water, and excess water was removed by a rotary evaporator. The resulting mixture was dried in a drying furnace at 200 °C for 2 hr, and fired in a muffle furnace at 450 °C for 2 hr to yield a powder.

b) To the powder (50g) thus obtained, was added ion exchange water. Slurry A was obtained.

c) In the slurry A, was immersed a rod shaped honeycomb carrier made of cordierite, having ϕ 25.4mm X L60mm (30cc), 400 cell/inch$^2$, and a thickness of a partition wall of 3.5 mil. Then the rod shaped honeycomb carrier was taken out of the slurry A. Excess adhesives were removed by air jetting and the rod shaped honeycomb carrier was heated at 200 °C for 2 hr.

The steps of immersing in the slurry A and subsequent heating were repeated until a predetermined amount of the catalyst composition (150g) was supported on the rod shaped honeycomb carrier. Finally, the rod shaped honeycomb carrier was fired in a muffle furnace at 500 °C for 2 hr to produce a purification catalyst C'.

d) To a mixture of Fe/Ce ion exchange β zeolite 41g, and an alumina binder ($Al_2O_3$, 20% conc., 26.7g), was added ion exchange water. Slurry B was obtained.

e) The purification catalyst C' was immersed in the slurry B, and then was taken out of the slurry B. Excess adhesives were removed by air jetting, and the purification catalyst C' was heated at 200 °C for 2 hr.

The steps of immersing in the slurry B and subsequent heating were repeated until a predetermined amount of the catalyst composition (150g) was supported on the purification catalyst C' . Finally, the purification catalyst C' was fired in a muffle furnace at 500 °C for 2 hr to produce a purification catalyst C. FIG. 5 shows a catalyst composition included in the purification means of Example I.

Next, other examples of preparation of the catalyst included in the purification means 17 will be described.

(Example J)

a) A mixture of an alumina powder (45g), an alumina binder (25g, 20% $Al_2O_3$ conc., Nissan Chemical Co. , Ltd.), and ion exchange water (150g) was placed in a polyethylene vessel (250 ml), and was treated by wet milling for 14 hr to produce a slurry.

In the slurry, was immersed a cordierite honeycomb carrier, having ϕ 25.4mm X L60mm (30cc), 400 cell/inch$^2$, and a thickness of a partition wall of 3.5 mil. Then the honeycomb carrier was taken out of the slurry. Excess adhesives were removed by air jetting and the honeycomb carrier was heated at 200 °C for 2 hr. The steps of immersing in the slurry and subsequent heating were repeated until a predetermined amount of the catalyst composition was supported on the honeycomb carrier. Finally, the honeycomb carrier was fired in a muffle furnace at 500 °C for 2 hr to coat 200g/L alumina thereon.

b) Subsequently, cerium nitrate, sodium nitrate, potassium nitrate and a titania sol were mixed in a rate of 6 (Ce) :3 (Na):3 (K) : 4 (Ti), and ion exchange water was added to produce a slurry.

In the slurry, was immersed the honeycomb carrier prepared in the above mentioned procedure a). Then, the honeycomb carrier was taken out of the slurry and excess adhesives were removed by air jetting. The honeycomb carrier was heated at 200 °C for 2 hr. The steps of immersing in the slurry and subsequent heating were repeated until a predetermined amount of the composition was supported on the alumina supported honeycomb carrier. Finally, the honeycomb carrier was fired in a muffle furnace at 600 °C for 1 hr to coat 80g/L alumina thereon.

c) Next, a diammine dinitro platinum nitrate solution and a rhodium nitrate solution were mixed in a rate of 19 (Pt) : 1 (Rh), and ion exchange water was added to prepare a mixture solution. In the mixture solution, was immersed the honeycomb carrier prepared in the above mentioned procedure b). Then, the honeycomb carrier was taken out of the mixture solution and excess adhesives were removed by air jetting. The honeycomb carrier was heated at 200 °C for 2 hr. The steps of immersing in the mixture solution and subsequent heating were repeated until a predetermined amount of the composition was supported on the honeycomb carrier. Finally, the honeycomb carrier was fired in a muffle furnace at 450 °C for 1 hr to coat 12g/L thereon.

d) Next, ion exchange water was added to magnesium nitrate to give a slurry. In the slurry, was immersed the honeycomb carrier prepared in the above mentioned procedure c). Then, the honeycomb carrier was taken out of the slurry and excess adhesives were removed by air jetting. The honeycomb carrier was heated at 200 °C for 2 hr. The steps of immersing in the slurry and subsequent heating were repeated until a predetermined amount of the composition

was supported on the honeycomb carrier. Finally, the honeycomb carrier was fired in a muffle furnace at 450 °C for 1 hr to coat 8g/L thereon.

As a result, the honeycomb carrier supporting a catalyst of 2.7Mg- (3.8Pt·0.2Rh) - (10Ce·5Na·5K·6.7Ti) /$Al_2O_3$ with a wash coat amount of 300g/L. Herein, the numeral value before each atomic symbol denotes a weight (g) of the shown metal component supported on each 1L apparent capacity of the honeycomb carrier. The indicated order shows the supported order. That is, a metal component indicated at the position nearest to $Al_2O_3$ was first layered, and other metal elements were layered in the order nearer to $Al_2O_3$. Here, components in parentheses were supported on a common layer.

<Performance Evaluation Test of Reforming Gas>

A performance evaluation test of the reforming means 18 was conducted by the performance evaluation device shown in FIG. 3 (referring to Equations (1) to (3)).

The catalyst supported honeycomb (reforming means 18) prepared in the above mentioned Example A, was filled in the performance evaluation device. After the honeycomb was heated by a heater 41 to 350 °C, air, nitrogen and steam were introduced by controlling the conditions as mentioned below by a gas flow regulator 42. When a temperature of the honeycomb was stabilized, a diesel fuel of which flow rate was controlled as mentioned below was introduced. Subsequently, the heater 41 was controlled so that the upper temperature of the catalyst supported honeycomb (reforming means 18) became 900 to 1000 °C. When the temperature was stabilized, concentrations of hydrogen and carbon monoxide were determined by a gas chromatograph 43.

Herein, GC390B (GL Sciences Inc.) was used for a gas chromatograph 43, and molecular sieve 5A was used for TCD and Porapak Q was used for FID.

For a diesel fuel, US Certification Diesel Fuel (Chevron Phmips, C/H = 1.81) was used. The same flow rate of the diesel fuel (4.25 g/min) was used in Examples and Comparative Examples. The introduction condition of oxidizing reagents was shown as follows.

FIG. 6 shows results of the performance evaluation test conducted under the following conditions.

A composition of a model gas in the partial oxidation reaction (referring to Equation (1)) was: air = 18.7L/min; O/C = 1.05.

A composition of a model gas in the autothermal reforming reaction (referring to Equation (2)) was: air=16.0L/min; Steam = 40.2g/min; O/C = 0.9; S/C = 0.95 in a Comparative Example.

A composition of a model gas in the steam reforming reaction (referring to Equation (3)) was: Steam = 126.8g/min; S/C = 3.0; nitrogen = 10L/min in a Comparative Example.

<Purification Performance Evaluation Test of Exhaust Gas>

A purification performance evaluation test of the exhaust gas from which a nitrogen oxide was removed by the exhaust purification apparatus 9 was conducted by the performance evaluation device shown in FIG. 4.

A model gas mixed by a gas flow rate regulator 44 for keeping the following gas conditions was introduced with flowing. The model gas was heated by the heater 41 to a predetermined temperature. The temperature was raised from 50 °C to 450 °C in a rate of 20 °C/min. The gas to be determined was introduced into a gas analyzer 45 passing through the above mentioned catalyst supported honeycombs (that is, adsorption means 30 and purification means 17), then a concentration of each gas component was determined. An adsorption ratio at each temperature was calculated by the following equations based on the concentration of the nitrogen oxide determined by the gas analyzer 45. Herein, a concentration of the nitrogen oxide was calculated by a chemical luminescence method.

Purification rate of nitrogen oxide:

$$A_{nox}\ (\%) = (C_{nox\ in} - C_{nox\ out})/C_{nox\ in} \times 100$$

$C_{nox\ in}$ = inputted concentration of nitrogen oxide

$C_{nox\ out}$ = outputted concentration of nitrogen oxide

<Example 1>

A model gas was prepared by mixing gases in a composition shown in FIG. 7A by the performance evaluation device in FIG. 4. The model gas was passed through the adsorption means 30 (prepared in Example B) and the purification means 17 (prepared in Example I) under a condition that SV is $50000h^{-1}$, the adsorption means 30 and the purification means 17 being constructed as shown in FIG. 7B. The evaluation test was conducted by changing a temperature and the results were shown in FIG. 8A.

<Example 2>

The model gas having the same composition shown in FIG. 7A was passed through the adsorption means 30 (prepared in Example B) and the purification means 17 (prepared in Example J) under the same condition as in Example 1, the adsorption means 30 and the purification means 17 being constructed as shown in FIG. 7B. The evaluation test was conducted by changing a temperature and the results were shown in FIG. 8B.

<Example 3>

The model gas having the same composition shown in FIG. 7A was passed through the adsorption means 30 (prepared in Examples C to H) and the purification means 17 (prepared in Example I) under the same condition as in Example 1, the adsorption means 30 and the purification means 17 being constructed as shown in FIG. 7B. The results were shown in FIG. 8C, in which the adsorption ratio of the nitrogen oxide at 150 °C in each Example was plotted.

<Example 4>

As shown in FIG. 9A, a $H_2$ concentration of the model gas was only changed in a range of 100ppm to 20000ppm in comparison to the composition of the model gas in FIG. 7A. The model gas was passed through the adsorption means 30 (prepared in Example B) and the purification means 17 (prepared in Example I), the adsorption means 30 and the purification means 17 being constructed as shown in FIG. 7B. The results were shown in FIG. 9B, in which the adsorption ratio of the nitrogen oxide in the flowing model gas at 150 °C was plotted.

<Example 5>

As shown in FIG. 10A, an $O_2$ concentration of the model gas was only changed in a range of 0.3% to 15% in comparison to the composition of the model gas in FIG. 7A. The model gas was passed through the adsorption means 30 (prepared in Example B) and the purification means 17 (prepared in Example I), the adsorption means 30 and the purification means 17 being constructed as shown in FIG. 7B. The results were shown in FIG. 10B, in which the adsorption ratio of the nitrogen oxide in the flowing model gas at 150 °C was plotted.

<Example 6>

As shown in FIG. 11A, a CO concentration of the model gas was only changed in a range of 1000ppm to 10000ppm in comparison to the composition of the model gas in FIG. 7A. The model gas was passed through the adsorption means 30 (prepared in Example B) and the purification means 17 (prepared in Example I), the adsorption means 30 and the purification means 17 being constructed as shown in FIG. 7B. The results were shown in FIG. 11B, in which the adsorption ratio of the nitrogen oxide in the flowing model gas at 150 °C was plotted.

<Comparative Example 1>

Next, an exhaust purification apparatus 9 having no reforming means 18 was considered and evaluated. As shown in FIG. 12A, a CO concentration of the model gas was decreased to 1000ppm and a $H_2$ concentration of the model gas was 0ppm in comparison to the composition of the model gas in FIG. 7A. The adsorption means 30 (prepared in Example B) and the purification means 17 (prepared in Example I) were constructed as shown in FIG. 7B. Results of the evaluation test conducted by changing a temperature were shown in FIG. 12B.

<Comparative Example 2>

Further, an exhaust purification apparatus 9 having no adsorption means 30 was considered and evaluated. The model gas having the composition in FIG. 7A was passed through the purification means 17 (prepared in Example

I) that was constructed as shown in FIG. 13A. Results of the evaluation test conducted by changing a temperature were shown in FIG. 13B.

<Comparative Example 3>

Furthermore, an exhaust purification apparatus 9 having no reforming means 18 and purification means 17 was considered and evaluated. As shown in FIG. 12A, a CO concentration of the model gas was decreased to 1000ppm and a $H_2$ concentration of the model gas was 0ppm in comparison to the composition of the model gas in FIG. 7A. The model gas having the above mentioned composition was passed through the adsorption means 30 (prepared in Example B) constructed as shown in FIG. 14B. Results of the evaluation test conducted by changing a temperature were shown in FIG. 14B.

Accordingly, it is apparent that remarkable effects on purification of the exhaust gas at a high efficiency are admitted, removing the nitrogen oxide in a wide range of a temperature initiated from a low temperature by the exhaust purification apparatus for an internal combustion engine and the methods for purifying the exhaust gas of the present invention. The effects are clearly shown in the results of the evaluation tests described hereinbefore, particularly, in the results obtained by comparison of Example 1 with Comparative Example 1 (or Comparative Example 2).

## Claims

**1.** An exhaust purification apparatus for an internal combustion engine, in which an atmosphere of an exhaust gas discharged from the internal combustion engine is periodically changed between oxidizing and reducing atmospheres to remove a nitrogen oxide contained in the exhaust gas, comprising:

a reforming means that introduces a reforming gas including hydrogen and carbon monoxide into an exhaust passage which leads the exhaust gas to the atmospheric air side,
an adsorption means that includes at least silver oxide which consumes the hydrogen and is reduced, the adsorption means adsorbing the nitrogen oxide and releasing the adsorbed nitrogen oxide as a temperature increases, and
a purification means that consumes the carbon monoxide and reduces the nitrogen oxide to purify the exhaust gas.

**2.** The exhaust purification apparatus for an internal combustion engine according to claim 1, wherein a silver content in a catalyst of the adsorption means is 0.1 to 10wt%.

**3.** The exhaust purification apparatus for an internal combustion engine according to claim 1, wherein the adsorption means includes one or more oxide components selected from a group of alumina, silica, zirconia, titania, ceria, and zeolite.

**4.** The exhaust purification apparatus for an internal combustion engine according to claim 1, wherein the exhaust gas to which the reforming gas is mixed has a hydrogen concentration of 0.01vol% to 4vol%.

**5.** The exhaust purification apparatus for an internal combustion engine according to claim 1, wherein the exhaust gas to which the reforming gas is mixed has an oxygen concentration of 0.2vol% to 21vol%.

**6.** The exhaust purification apparatus for an internal combustion engine according to claim 1, wherein the reforming gas is generated by a fuel and an oxygen contained gas, and a concentration of the carbon monoxide is higher than a concentration of the hydrogen.

**7.** The exhaust purification apparatus for an internal combustion engine according to claim 1, wherein the reforming means includes as a catalyst at least one or more metal components selected from a group of platinum, rhodium, palladium, nickel, cobalt, and iron, and at least one or more oxides or composite oxides selected from a group of ceria, alumina, zirconia, titania, magnesia, and zeolite.

**8.** The exhaust purification apparatus for an internal combustion engine according to claim 1, wherein the reforming means is independently provided as being separated from the exhaust passage.

**9.** The exhaust purification apparatus for an internal combustion engine according to claim 1, wherein the reforming

means is provided inside the exhaust passage.

**10.** The exhaust purification apparatus for an internal combustion engine according to claim 1, wherein the purification means comprises:

a catalyst component A including a mixture of and/or a composite mixture of ceria, praseodymium oxide, and oxides of at least two elements selected from a group of cerium, zirconium, praseodymium, neodymium, terbium, samarium, gadolinium, and lanthanum;
a catalyst component B including at least one noble metal catalyst component selected from a group of platinum, rhodium, palladium, and oxides of the metals thereof;
a catalyst component C including a solid acid supporting at least one metal oxide selected from a group of oxides of vanadium, tungsten, molybdenum, cupper, iron, cobalt, nickel, and manganese.

**11.** The exhaust purification apparatus for an internal combustion engine according to claim 10, wherein the purification means further comprises at least one or more metals selected from a group of alkaline metals including Li, Na, K, Rb, and Cs and alkaline earth metals including Mg, Ca, Sr, and Ba.

**12.** The exhaust purification apparatus for an internal combustion engine according to claim 1, wherein the adsorption means and the purification means are layered each other, and are arranged in a common converter.

**13.** The exhaust purification apparatus for an internal combustion engine according to claim 1, wherein the adsorption means and the purification means are mixed with being dispersed each other, and are arranged in a common converter.

**14.** An exhaust purification method in which an atmosphere of an exhaust gas discharged from an internal combustion engine is periodically changed between oxidizing and reducing atmospheres to remove a nitrogen oxide contained in the exhaust gas, comprising steps of:

a reforming step of mixing a reforming gas that includes carbon oxide and hydrogen to the exhaust gas;
an adsorption step in which silver oxide consumes the hydrogen and is reduced to produce metal silver, and the metal silver adsorbs the nitrogen oxide;
a releasing step in which the metal silver is oxidized to return to the silver oxide as a temperature increases, and the adsorbed nitrogen oxide is released,
a purification step in which the carbon oxide is consumed and the nitrogen oxide is reduced to purify the exhaust gas.

FIG.1

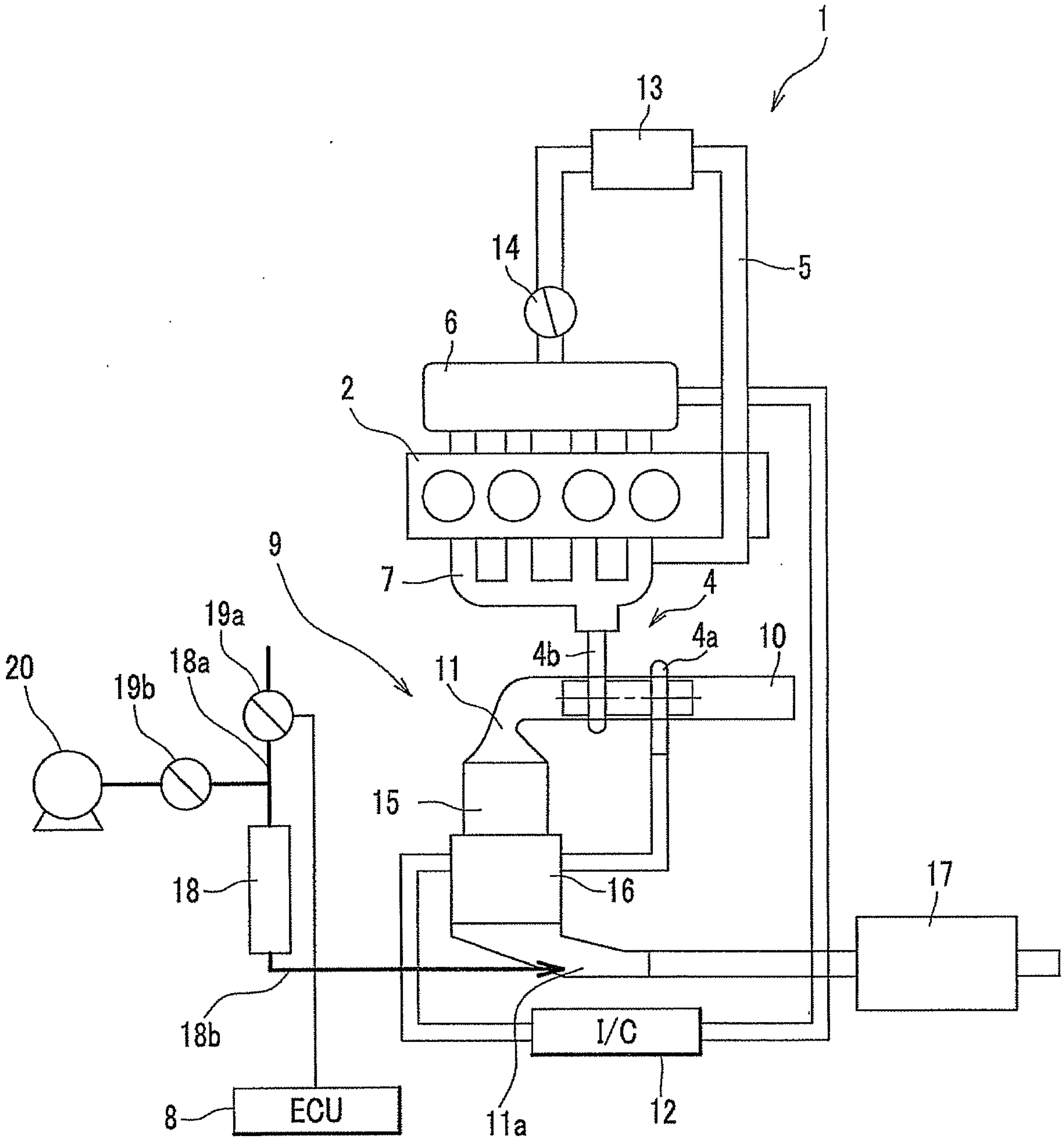
1
13
14
5
6
2
9
7
4
19a
4a
10
20
19b
18a
4b
11
15
18
16
17
18b
I/C
8
ECU
11a
12

FIG.2A

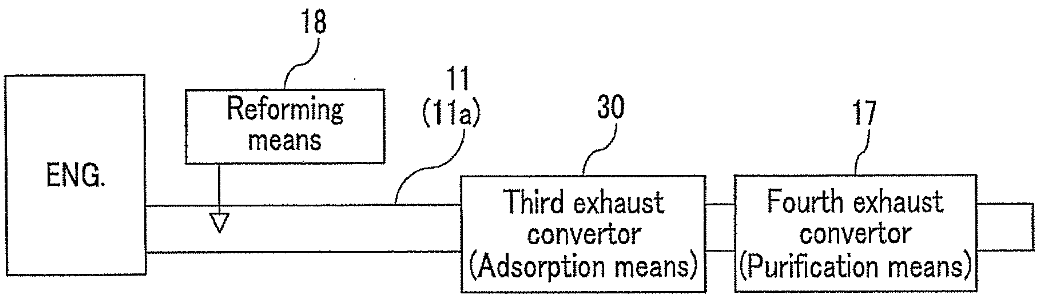


FIG.2B

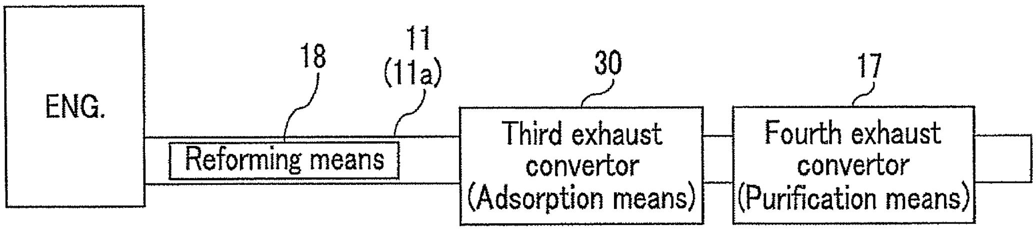


FIG.2C

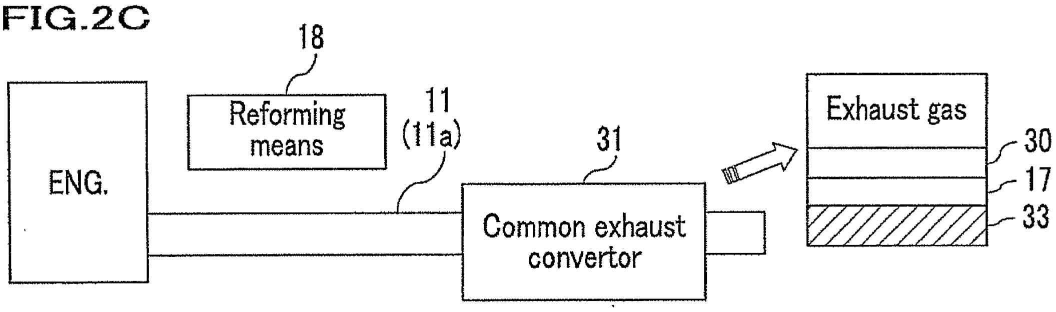


FIG.2D

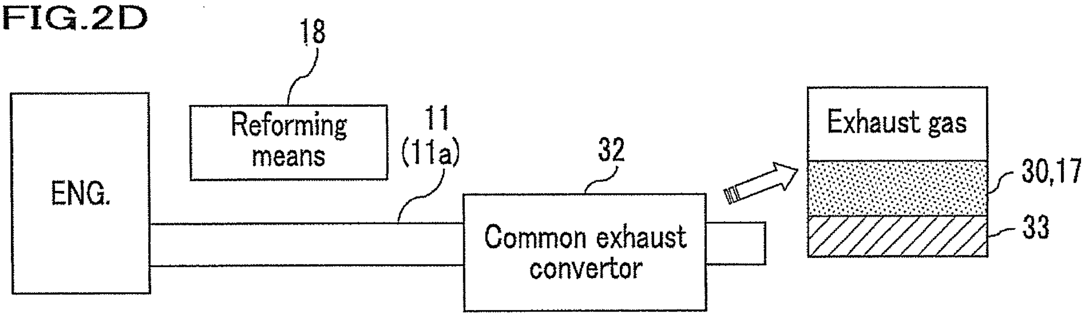

FIG.3

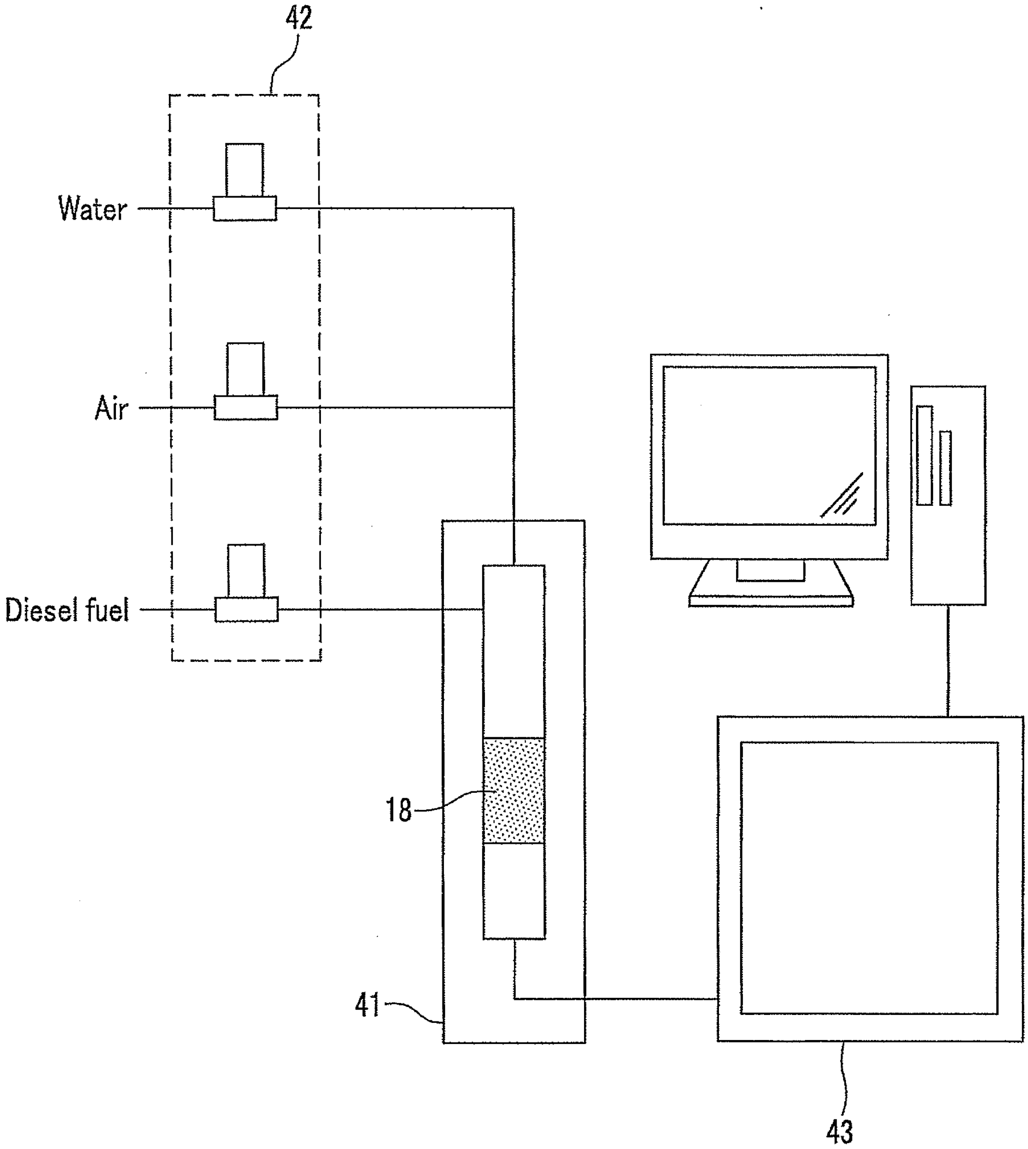

FIG.4

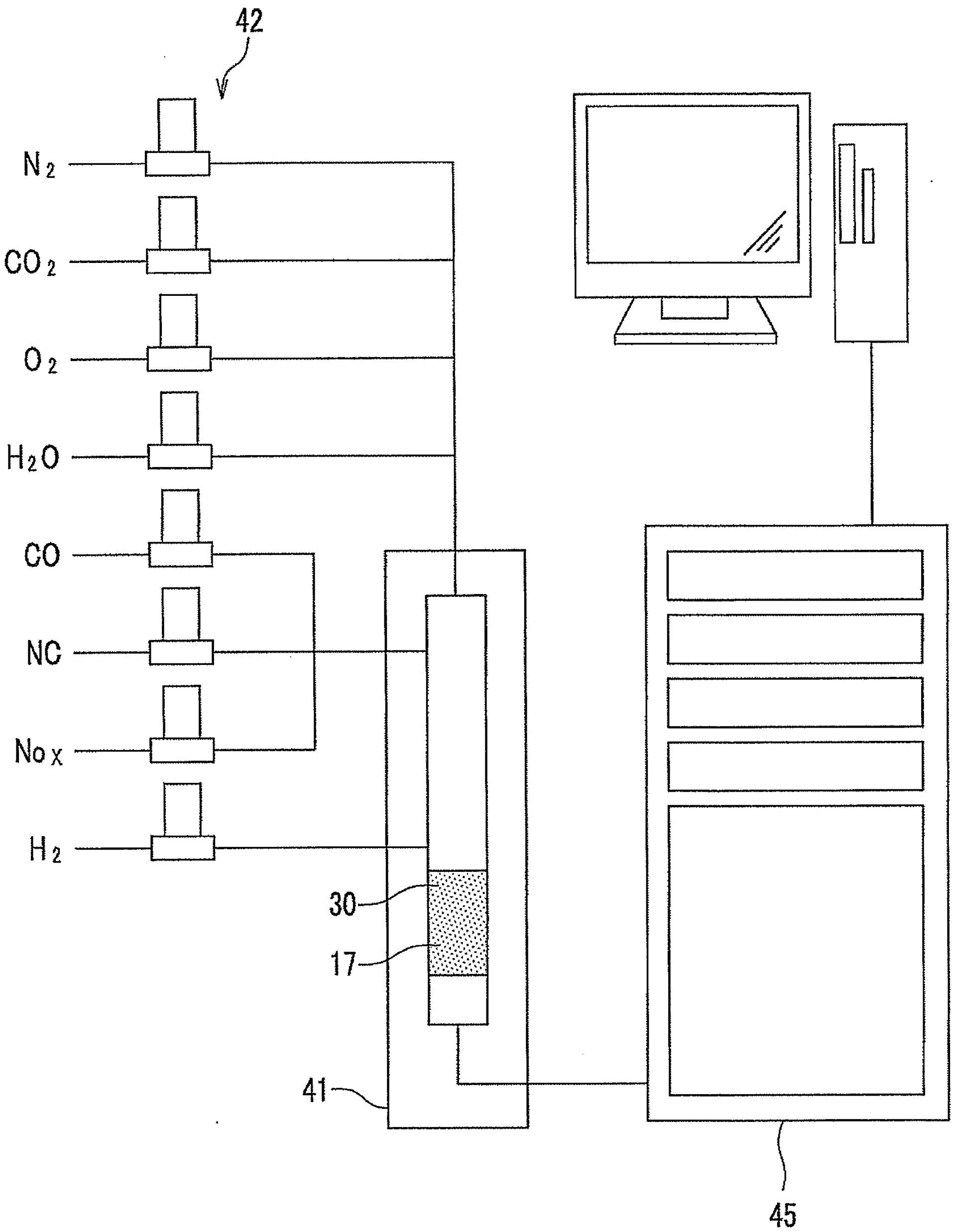

FIG.5

Catalyst composition of purification means(Example I)

| Composition | LNC [g/L] |
|---|---|
| Pt | Lower layer 4.5 |
| Rh | – |
| Pd | – |
| CeO2 | Lower layer 60 |
| Fe, Ce ion exchange β zeolite | Upper layer 75 |
| Al2O3 | Upper layer 7<br>Lower layer 30 |
| Binder | Upper layer 8 |
| Ce-Pr-La-Ox | Lower layer 60 |
| Zr-Nd-Ox | Lower layer 20 |

FIG.6

Results of reforming performance evaluation test

| | Yield[%] | Reforming gas composition[%] | | CO/H2[-] |
|---|---|---|---|---|
| | | H2 | CO | |
| Partial oxidation reaction | 80 | 20.8 | 24.0 | 1.2 |
| Autothermal reforming reaction | 83 | 28.0 | 16.3 | 0.6 |
| Steam reforming reaction | 87 | 42.2 | 12.6 | 0.3 |

FIG.7A

<Example 1>

Composition of model gas

| | |
|---|---|
| NO | 100ppm |
| C3H6 | 500ppmC |
| CO | 6000ppm |
| O2 | 10% |
| CO2 | 6% |
| H2 | 5000ppm |
| H2O | 7% |
| N2 | bal. |

FIG.7B

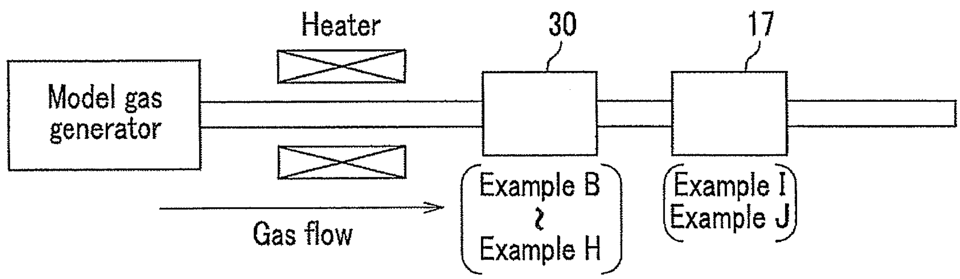

FIG.8A

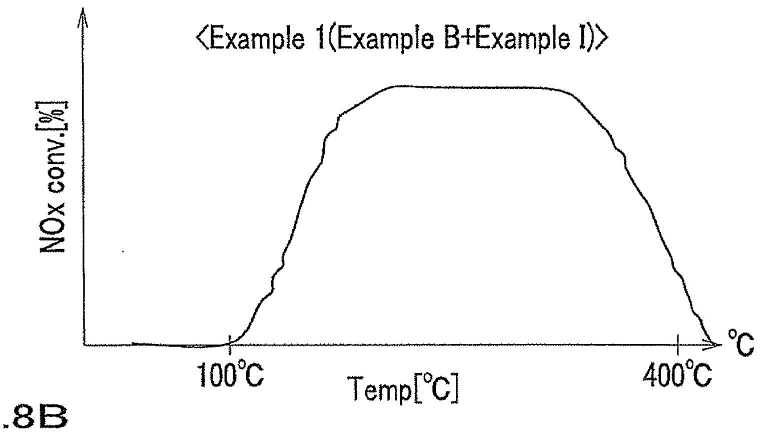


FIG.8B

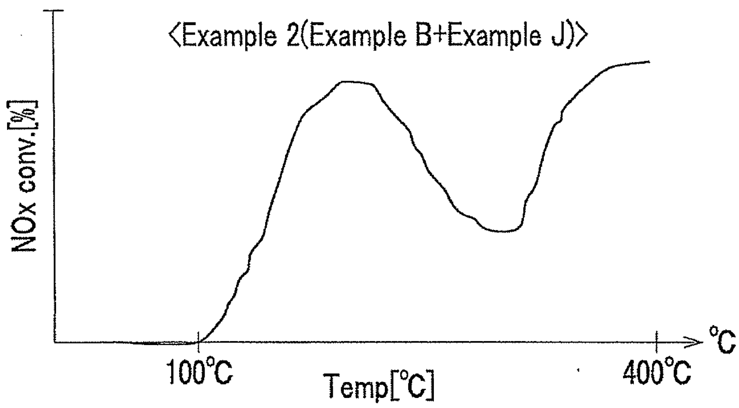


FIG.8C

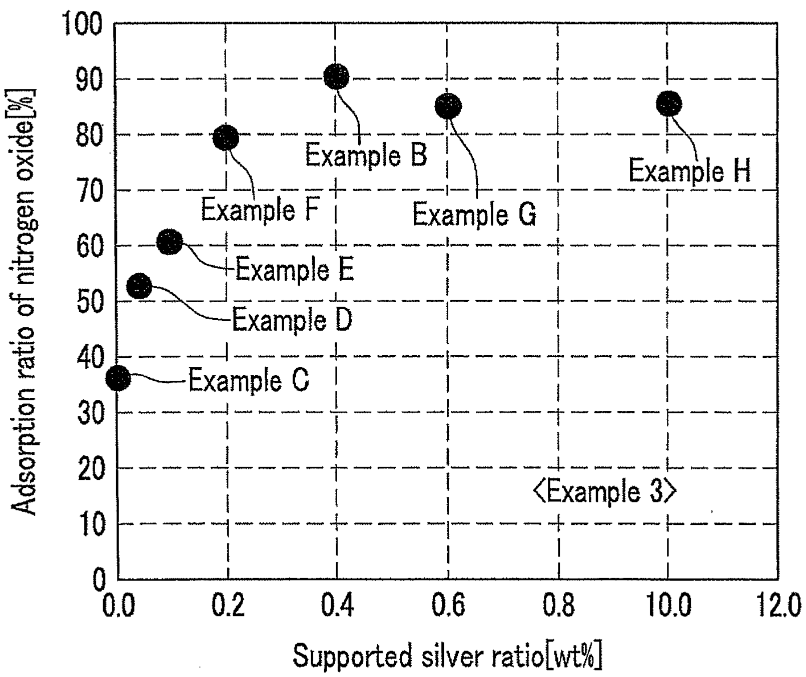

FIG.9A

〈Example 4〉

Composition of model gas

| | | |
|---|---|---|
| | NO | 100ppm |
| | C3H6 | 500ppmC |
| | CO | 6000ppm |
| | O2 | 10% |
| | CO2 | 6% |
| ※ | H2 | 100～ 20000ppm |
| | H2O | 7% |
| | N2 | bal. |

FIG.9B

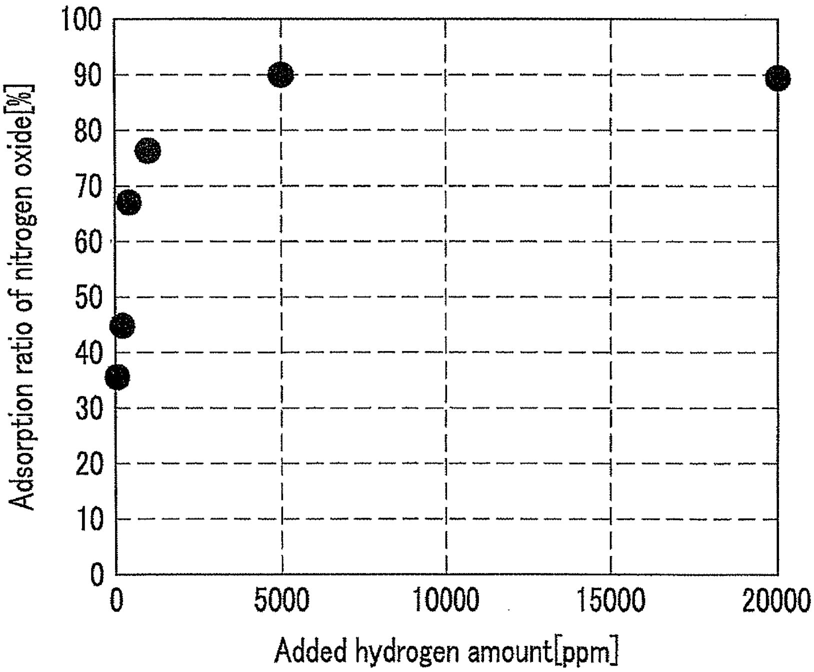

FIG.10A

<Example 5>

Composition of model gas

| | | |
|---|---|---|
| | NO | 100ppm |
| | C3H6 | 500ppmC |
| | CO | 6000ppm |
| ※ | O2 | 0.3~15% |
| | CO2 | 6% |
| | H2 | 5000ppm |
| | H2O | 7% |
| | N2 | bal. |

FIG.10B

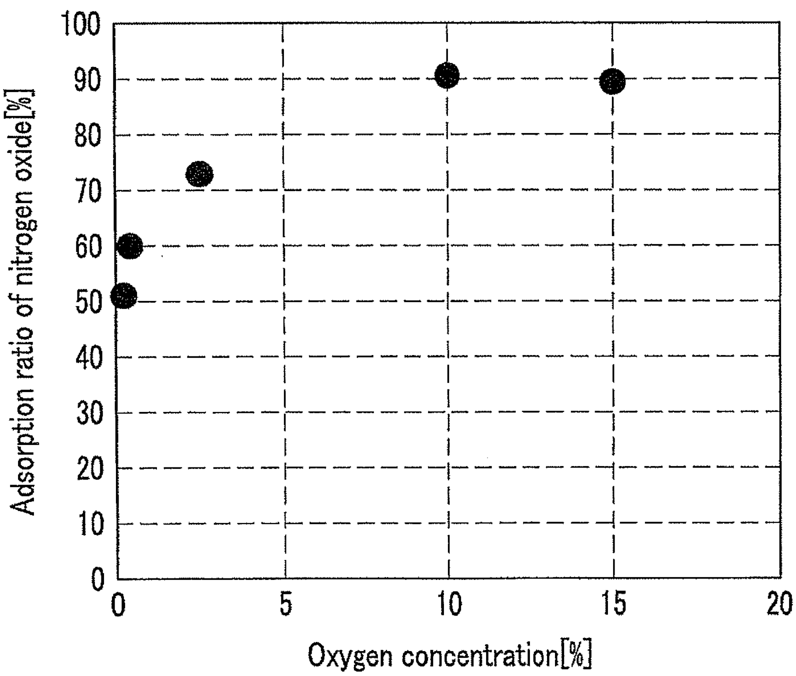

FIG.11A

<Example 6>

Composition of model gas

| | | |
|---|---|---|
| | NO | 100ppm |
| | C3H6 | 500ppmC |
| ※ | CO | 1000~10000ppm |
| | O2 | 10% |
| | CO2 | 6% |
| | H2 | 5000ppm |
| | H2O | 7% |
| | N2 | bal. |

FIG.11B

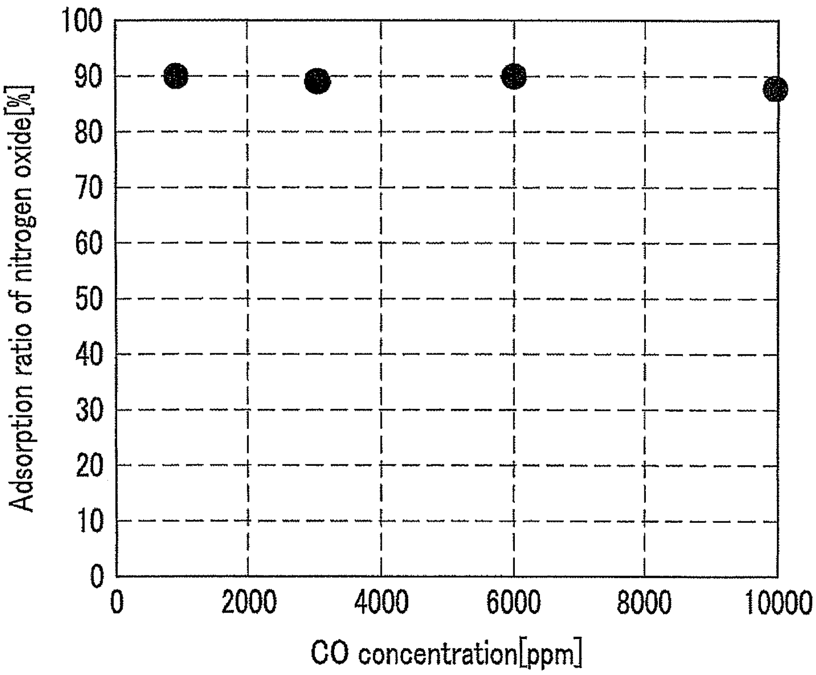

FIG.12A

<Comparative example1>

Composition of model gas

| | | |
|---|---|---|
| | NO | 100ppm |
| | C3H6 | 500ppmC |
| ※ | CO | 1000ppm |
| | O2 | 10% |
| | CO2 | 6% |
| ※ | H2 | 0ppm |
| | H2O | 7% |
| | N2 | bal. |

FIG.12B

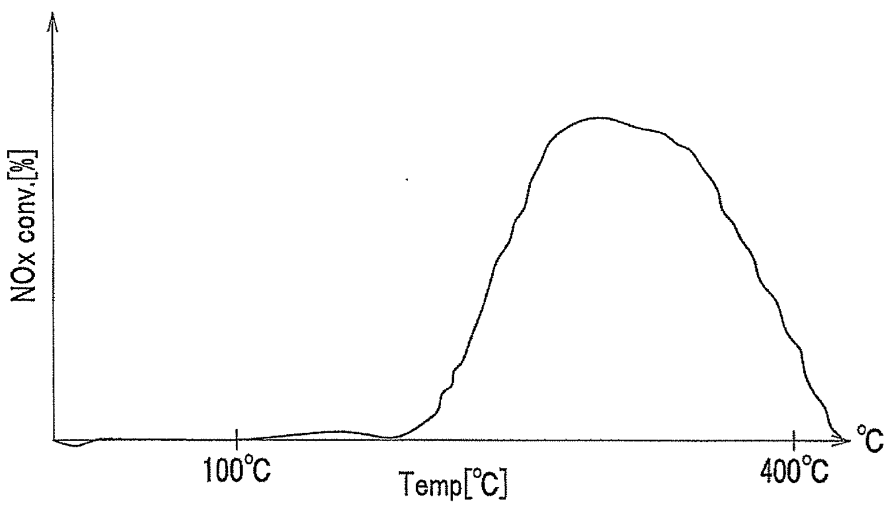

FIG.13A

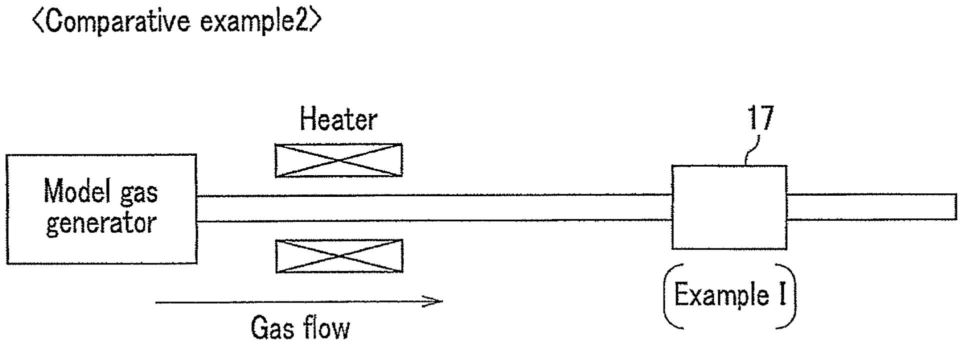


FIG.13B

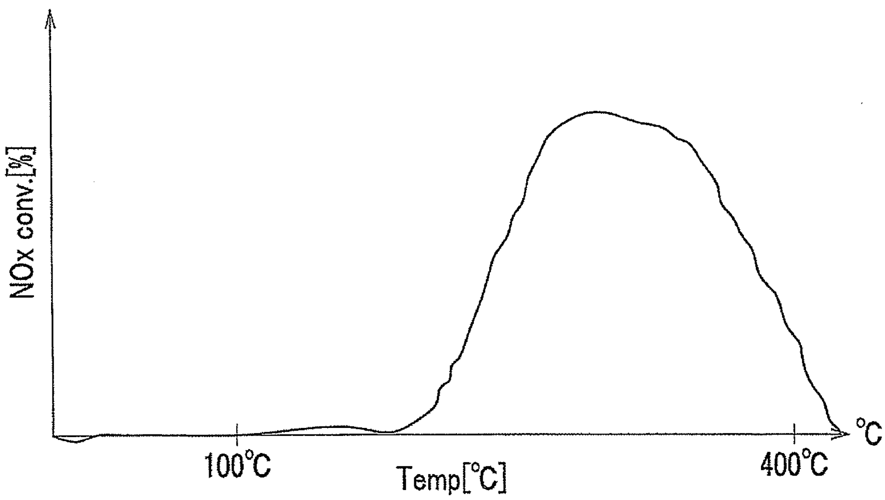

FIG.14A

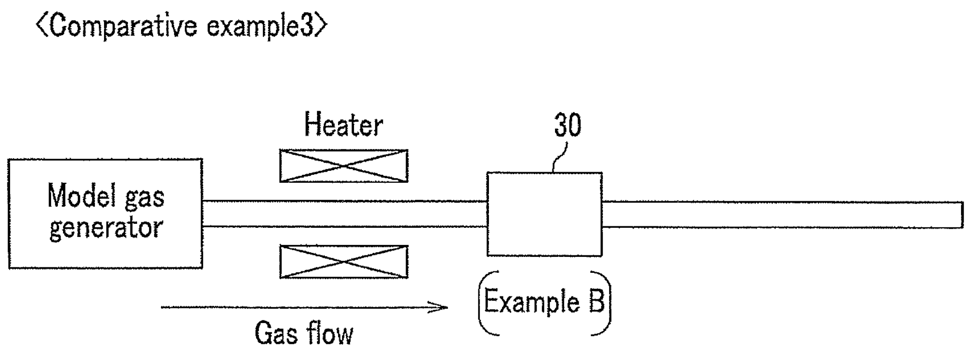


FIG.14B

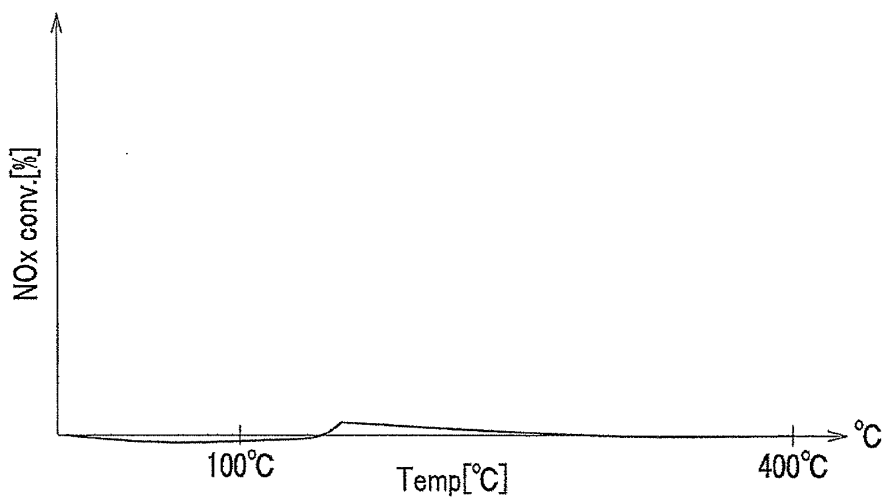

**INTERNATIONAL SEARCH REPORT**

International application No. PCT/JP2008/070033

A. CLASSIFICATION OF SUBJECT MATTER
*B01D53/94*(2006.01)i, *B01D53/56*(2006.01)i, *B01D53/81*(2006.01)i, *B01D53/86*(2006.01)i, *B01J20/02*(2006.01)i, *B01J23/50*(2006.01)i, *B01J23/58*(2006.01)i, *B01J23/63*(2006.01)i, *B01J29/76*(2006.01)i, *F01N3/08*(2006.01)i,
According to International Patent Classification (IPC) or to both national classification and IPC

B. FIELDS SEARCHED

Minimum documentation searched (classification system followed by classification symbols)
B01J21/00-38/74, B01D53/86, B01D53/94

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 11-114420 A (Petroleum Energy Center), 27 April, 1999 (27.04.99), Claims 6 to 10; Par. Nos. [0021], [0022], [0046], [0049], [0079], [0080] (Family: none) | 1-6,9,12-14<br>7,8,10,11 |
| Y | JP 2002-54427 A (Toyota Central Research and Development Laboratories, Inc.), 20 February, 2002 (20.02.02), Par. Nos. [0005] to [0007], [0036] (Family: none) | 7,8,10,11 |
| Y | WO 2005/044426 A1 (Valtion Teknillinen Tutkimuskeskus), 19 May, 2005 (19.05.05), Claim 1 & US 2007/0274889 A1 & EP 1685891 A1 | 10,11 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 January, 2009 (06.01.09) | 13 January, 2009 (13.01.09) |
| Name and mailing address of the ISA/<br>Japanese Patent Office<br>Facsimile No. | Authorized officer<br>Telephone No. |

Form PCT/ISA/210 (second sheet) (April 2007)

**INTERNATIONAL SEARCH REPORT**

International application No.
PCT/JP2008/070033

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-327838 A (Nissan Diesel Motor Co., Ltd.), 27 November, 2001 (27.11.01), Claim 4 (Family: none) | 1-14 |

Form PCT/ISA/210 (continuation of second sheet) (April 2007)

**INTERNATIONAL SEARCH REPORT**

International application No.
PCT/JP2008/070033

Continuation of A. CLASSIFICATION OF SUBJECT MATTER
(International Patent Classification (IPC))

*F01N3/10*(2006.01)i, *F01N3/24*(2006.01)i, *F01N3/28*(2006.01)i

(According to International Patent Classification (IPC) or to both national classification and IPC)

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007290273 A
- JP 2586738 B
- JP 2600492 B
- WO 2005044426 A
- JP 3642273 B


### Non-patent literature cited in the description


- Development of three-way catalyst system with NOX absorption/reduction. *Transactions of the Society of Automotive Engineers of Japan,* October 1995, vol. 26 (4
- A NOX Reduction System Using Ammonia Storage-Selective Catalytic Reduction in Rich and Lean Poerations. *Aachener Kolloquium Fahrzeug-und Motorentechnik,* 2006, vol. 15, 259-270
- **G. Qi et al.** Selective catalytic reaction of nitric oxide with hydrogen over Pd-based catalysts. *Journal of Catalysis,* 2006, vol. 237, 381-392
- **T. Nanba et al.** Improvements in the N2 selectivity of Pt catalysts in the NO-H2-O2 reaction at low temperature. *Applied Catalysis B: Environmental,* 2003, vol. 46, 353-364